# EUROPEAN PATENT SPECIFICATION

(11) **EP 4 180 164 B1**
(45) Date of publication and mention of the grant of the patent: **30.07.2025**
(21) Application number: 21857276.6
(22) Date of filing: 30.05.2021
(51) Int. Cl.: B23K 9/18, B23K 9/235, B23K 9/32, B23K 35/30, B23K 33/00, B23K 35/02, B23K 103/04, C22C 19/05, C22C 38/08

(54) **SHIPBUILDING 5NI STEEL SUBMERGED ARC WELDING METHOD**
UNTERPULVERSCHWEISSVERFAHREN FÜR SCHIFFSBAU 5NI-STAHL
PROCÉDÉ DE SOUDAGE À L'ARC SOUS FLUX EN POUDRE D'ACIER 5NI DE CONSTRUCTION NAVALE

(30) Priority: 18.08.2020 CN 202010832616
(43) Date of publication of application: 17.05.2023
(73) Proprietor: Jiangyin Xingcheng Special Steel Works Co., Ltd, Jiangyin, Jiangsu 214429 (CN)
(72) Inventor: LIU, Zhaoxia, Jiangyin, Jiangsu 214429 (CN); LUO, Yuandong, Jiangyin, Jiangsu 214429 (CN); XU, Xiaohong, Jiangyin, Jiangsu 214429 (CN); BAI, Yun, Jiangyin, Jiangsu 214429 (CN); LIU, Jun, Jiangyin, Jiangsu 214429 (CN); MENG, Yu, Jiangyin, Jiangsu 214429 (CN); ZHOU, Yonghao, Jiangyin, Jiangsu 214429 (CN); WU, Jinming, Jiangyin, Jiangsu 214429 (CN); CHEN, Chong, jiangyin, Jiangsu 214429 (CN)
(74) Representative: Huang, Liwei
(86) International application number: PCT/CN2021/097059
(87) International publication number: WO 2022/037175

(56) References cited:
- CN-A- 101 412 136
- CN-A- 101 658 970
- CN-A- 102 873 439
- CN-A- 103 433 603
- CN-A- 106 334 860
- CN-A- 106 334 860
- CN-A- 106 457 481
- CN-A- 107 309 527
- CN-A- 110 102 933
- CN-A- 111 440 990
- CN-A- 112 192 001
- US-A- 5 304 346
- US-B2- 10 688 602

## Description

### TECHNICAL FIELD

The present invention relates to a submerged arc welding method of 5Ni steel for shipbuilding.

### BACKGROUND

With the development of the petrochemical industry, some ships (used to transport liquefied petroleum gas, liquefied ethylene or propane obtained after petroleum cracking and liquefaction), are usually built by 5Ni steel having high strength, good toughness at low temperature, high elongation, and low remanence.

Usually the Ni content of 5Ni steel is between 4.7 and 5.3%. Due to the high Ni content of 5Ni steel, it does not only bring a series of problems in production and manufacture of steel, but also brings problems in welding and shaping for subsequent manufacturers. A few domestic steel enterprises have successfully developed shipbuilding 5Ni steels that can meet the requirements of Classification Societies and are slowly brought to the market. However, in respect of welding, especially submerged arc welding, there are still problems in low-temperature toughness and unstable performances in cold bending after welding, and thus it is difficult to meet the weldability test requirements of Classification Societies.

By search, we found a Chinese patent publication CN10852661A disclosing a method for welding with a nickel-based solid welding wire under gas protection, which realizes the welding of 5Ni steel and 9Ni steel under gas protection. However, in this document, only the welding of 9Ni steel has been described in specific examples, as for the welding effect of 5Ni steel using this method, there is no specific description. To solve the problem of poor weldability of 5Ni steel is an important part in the development of shipbuilding industry.

US 10688602B2 discloses a submerged arc welding process. CN 110102933A discloses a weld flux for welding steels. CN 101412136A relates to a method for welding a storage tank. CN 111440990A discloses a method of manufacturing a 5Ni steel plate with low remanence and excellent surface quality.

### CONTENT OF THE INVENTION

The present invention selects a suitable 5Ni steel plate, matching welding consumables and a matching submerged arc butt welding process. We carry out a series of mechanical performance tests in weldability, and the results show that the submerged arc welding of the shipbuilding 5Ni steel of the present invention fully meets the weldability test requirements of Classification Societies.

The invention is set out in the appended set of claims.

To be specific, the object of the present invention is to provide a submerged arc welding process for shipbuilding 5Ni steel. This process does not require preheating before welding and does not require heat treatment after welding. This process is described as follows:
(1) using 5Ni steel with a tensile strength of 630-670 MPa as base material for splicing; a matching welding material is, a welding material with a tensile strength of 630-710 MPa, wherein a welding wire has a diameter of Φ2.4 mm or more and belongs to a product model of INCO-WELD Filler Metal C-276, and a flux is INCOFLUX 9;
(2) the to-be-spliced material uses a K-shaped groove as groove for the submerged arc welding; the groove has an angle of 45°and a blunt edge of 5mm;
(3) welding parameters: welding current is 410±10 A, welding voltage is 32±1 V, welding speed is 27±2 cm/min, welding energy is 30±3 KJ/cm. Continuously welding abutting joints of to-be-spliced base materials wherein the base materials have the same plate thickness, until the weld seam is filled; after each pass of welding, using a wire brush to clean weld bead; a flux baking is performed at 350°C×1h; an interpass temperature is controlled to be ≤ 80°C.

Preferably, the welding method of the present application is used to to-be-spliced materials with a thickness of 40 mm to 50 mm.

In the present application, the welding wire used in the welding process has following chemical composition in mass percentage, C: ≤0.03%, Si: 0.10-0.40%, Mn: 0.2-1.0%, P: ≤0.020%, S: ≤0.030%, Cr: 14-18%, Ni: 53-60%, W: 3.0-4.5%, Fe: 4.0-7.0%, Mo: 15.0-17.0%, and the balance is unavoidable impurity elements.

The welded joint of two spliced base materials, obtained by the above-mentioned submerged arc welding method of the shipbuilding 5Ni steel, has been tested. The results of ultrasonic flaw detection to the weld seam meet the I-level requirements stipulated in the GB/T 11345-1989 standard.

The welded joint of two spliced base materials, obtained by the above-mentioned submerged arc welding method of the shipbuilding 5Ni steel, has a tensile strength of 620-660 MPa, a diameter of bending center D=4a, a qualified cold bending performance (whether forward bending or backward bending), and a stable transverse impact toughness value at a very low temperature of -130°C, wherein the transverse impact toughness is ≥ 70 J at the weld seam, ≥ 60 J at a fusion line, ≥ 100 J at Heat Affected Zone HAZ, ≥ 180 J at the base material, respectively, which meet the requirements of weldability certification of Classification Societies and meet the requirements of production, that is, it is significantly higher than the transverse impact toughness value of ≥ 27 J at an ultra-low temperature of -110°C as required by Classification Society Regulations .

For the welded joint of two spliced base materials, obtained by the above-mentioned submerged arc welding method of the shipbuilding 5Ni steel, the microstructure in the weld seam zone is austenite, and the microstructure in the Heat Affected Zone is lower bainite. The lower bainite structure has fine lamellar layers, and thus has good toughness at an ultra-low temperature.

Compared with the prior arts, the present invention has the following advantages:
(1) It satisfied the manufacturing technology of submerged arc welding process for shipbuilding 5Ni steel used for liquefied petroleum gas ships, liquefied ethylene ships and other ships. The tensile strength and impact absorbed energy value (at weld seam, fusion line, heat-affected zone, etc.) of the submerged-arc-welded joints have reached a high level, and the welded joints have excellent impact toughness at a low temperature and excellent cold bending performance.
(2) The structure in the heat-affected zone HAZ of the welded joint of the present invention is mainly lower bainite structure, wherein the bainite has fine lamellar layers, and the welding metal is mainly austenite structure, so that the weld seam has excellent strength and toughness performance at an extremely low temperature and has excellent cold bending performance.
(3) In the process of manufacturing the shipbuilding 5Ni steel abutting joint with thick plate structure, a welding process without preheating before welding and without heat treatment after welding has been realized. The multi-layer and multi-pass continuous welding process makes the welded joint have excellent comprehensive mechanical properties. The welding process is easy to operate, efficient, and energy-saving, and it is suitable for manufacturing and promoting 5Ni steel for use in ships such as liquefied petroleum gas ships, liquefied ethylene ships, and liquefied propane ships.

### DESCRIPTION OF DRAWINGS

Fig. 1 is a schematic diagram of the passes of the submerged arc welding for the to-be-spliced base materials (50mm+50mm).
Fig. 2 is the microstructure of the weld seam of the welded joint in Example 1 of the present invention, which shows austenite microstructure.

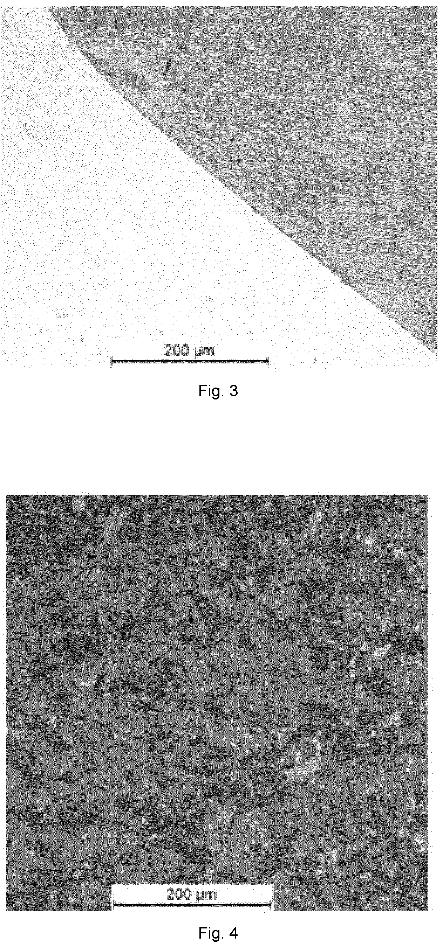

Fig. 3 is the microstructure of the fusion line of the welded joint in Example 1 of the present invention, wherein one side is austenite microstructure, and the other side is lower bainite microstructure, and the bainite has fine lamellar layers.
Fig. 4 shows the microstructure of the HAZ zone of the welded joint in Example 1 of the present invention, which is 3 mm away from the fusion line. It is a lower bainite structure with fine layers, and the initial austenite is finer than the initial austenite structure in Fig. 3.

### DETAILED EMBODIMENTS

The present invention will be further described in detail below with reference to the embodiments of the accompanying drawings. The embodiments are exemplary and intended to explain the present invention, but should not be understood as limiting the present invention.

### Example 1:

Base material: 5Ni steel for shipbuilding, with tensile strength of 653 MPa and transverse impact toughness value of ≥ 180 J at an extremely low temperature of -130 °C, a combination of thick plates 50mm+50mm. The size of each test plate for butt welding is 1300mm×300mm×50mm. The submerged arc welding groove adopts K-type groove, the groove has an angle of 45° and a blunt edge of 5 mm;

### Matching welding material:

Welding wire: its chemical composition in mass percentage is: C: 0.02%, Si: 0.15%, Mn: 0.4%, P: 0.015%, S: 0.01%, Cr: 16.4%, Ni: 57%, W: 3.5% , Fe: 5.50%, Mo: 16.0%, and the balance is unavoidable impurity elements.

The diameter of the welding wire is Φ2.4 mm. During welding, the welding wire is used with the flux INCOFLUX 9. The deposited metal has following mechanical properties: yield strength Rp0.2: 407 MPa, tensile strength Rm: 665 MPa, elongation A: 42.0%, Reduction of area in Z direction: 38%, AKv impact absorption work at -110°C: 92 J, 89 J, 77 J.

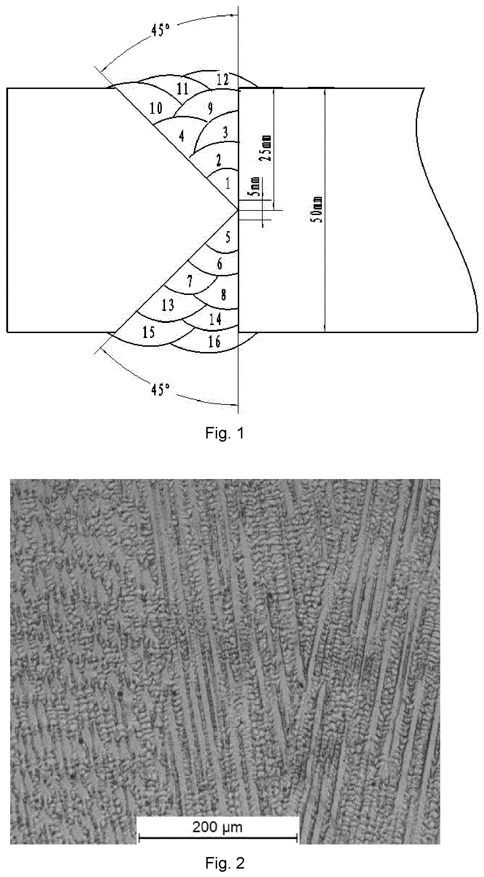

The parameters in welding process are: welding current 410±10 A, welding voltage 32±1 V, welding speed 27±2 cm/min, welding energy 30 KJ/cm; a flux baking is performed at 350°C×1h; an interpass temperature is controlled to be 50-70 °C. The welding passes can be seen in the Fig. 1.

### Example 2:

Base material: 5Ni steel for shipbuilding, with tensile strength of 639 MPa, a combination of thick plates 40mm+40mm. The size of each test plate for butt welding is 1300mm×300mm×40mm. The submerged arc welding groove adopts K-type groove, the groove has an angle of 45° and a blunt edge of 5 mm;

### Matching welding material:

Welding wire: its chemical composition in mass percentage is: C: 0.02%, Si: 0.20%, Mn: 0.45%, P: 0.013%, S: 0.01%, Cr: 16.8%, Ni: 58%, W: 3.3%, Fe : 5.80%, Mo: 16.5%, and the balance is unavoidable impurity elements.

The diameter of the welding wire is Φ2.4 mm. During welding, the welding wire is used with the flux INCOFLUX 9. The deposited metal has following mechanical properties: yield strength Rp_{0.2}: 513 MPa, tensile strength Rm: 660 MPa, elongation A: 32.0%, Reduction of area in Z direction: 51%, AKv impact absorption work at -110°C: 92 J, 109 J, 84 J.

The parameters in welding process are: welding current 410±10 A, welding voltage 32±1 V, welding speed 27±2 cm/min, welding energy 30 KJ/cm; a flux baking is performed at 350°C×1h; an interpass temperature is controlled to be 50-70 °C.

The welded joints obtained by the above-mentioned welding methods of the 5Ni steel for shipbuilding, have been tested. The results of ultrasonic flaw detection to the weld seams meet the I-level requirements stipulated in the GB/T 11345-1989 standard.

For the welded joints obtained by the above-mentioned welding method of the 5Ni steel for shipbuilding, the mechanical properties of the welded joints are tested. The results of the tensile test, impact test and cold bending test are shown in Table 1, Table 2 and Table 3 respectively. As shown from the example's performance, the welded joint of steel plates has a tensile strength of 620-660 MPa, a diameter of bending center D=4a, a qualified cold bending performance (whether forward bending or backward bending), and stable transverse impact toughness values at a very low temperature of -130°C at the weld seam, the fusion line and the Heat Affected Zone HAZ, which meet the requirements of weldability certification of Classification Societies and meet the requirements of production.

**Table 1 Tensile test results of butt joints**

| Steel | Examples | Heat Input in Welding | Tensile Strength/ Rm/MPa | Location of Fracture |
|---|---|---|---|---|
| 5Ni | Example 1 | 30 kJ/cm | 656, 639 | base material, base material |
| | Example 2 | 30 kJ/cm | 635, 626 | weld seam, base material |

**Table 2 Bending test results of butt joints**

| Steel | Example | Heat Input in Welding | Bending, d=4a, 180° | |
|---|---|---|---|---|
| | | | Forward | Backward |
| 5Ni | Example 1 | 30 kJ/cm | qualified | qualified |
| | Example 2 | 30 kJ/cm | qualified | qualified |

**Table 3 Impact test results of welded joints**

| | | Results of impact tests J×-130°C | |
|---|---|---|---|
| Steel | | 5Ni | |
| Example | | Example 1 | Example 2 |
| Heat Input in Welding | | 30 kJ/cm | 30 kJ/cm |
| Impact Specimen Notch | center of weld seam | 78, 73, 80/ 77 | 82, 85, 66/ 78 |
| | fusion line | 98, 82, 91/ 90 | 88, 63, 101/ 84 |
| | fusion line + 2mm (HAZ) | 136, 95, 158/130 | 128, 105, 127/ 120 |
| | fusion line + 5mm (HAZ) | 278, 274, 295/ 282 | 132,184, 196/ 171 |
| | fusion line + 20mm (base material) | 246, 190, 200/ 212 | 183, 195, 181/ 186 |

| | | | |
|---|---|---|---|
| Note: The value after "/" is the average value of the group. | | | |

It shows that the heat-affected zone of the weld has extremely-low-temperature toughness.

## Claims

1. A submerged arc welding method of 5Ni steel for shipbuilding, comprising
(1) using 5Ni steel with a tensile strength of 630-670 MPa as base material for splicing, wherein the to-be-spliced base material has a transverse impact toughness value of ≥ 180 J at -130 °C; a matching welding material is, a welding material with a tensile strength of 630-710 MPa, wherein a welding wire has a diameter of Φ2.4 mm or more and belongs to a product model of INCO-WELD Filler Metal C-276, and a flux is INCOFLUX 9; wherein the welding wire has following chemical composition in mass percentage, C: ≤0.03%, Si: 0.10-0.40%, Mn: 0.2-1.0%, P: 0.020%, S: ≤0.030%, Cr: 14-18%, Ni: 53-60%, W: 3.0-4.5%, Fe: 4.0-7.0%, Mo: 15.0-17.0%, and the balance is unavoidable impurity elements;
(2) the to-be-spliced material uses a K-shaped groove as groove for the submerged arc welding;
(3) welding parameters: welding current is 410±10 A, welding voltage is 32±1 V, welding speed is 27±2 cm/min, welding energy is 30±3 KJ/cm; continuously welding abutting joints of to-be-spliced base materials wherein the base materials have the same plate thickness, until the weld seam is filled; after each pass of welding, using a wire brush to clean weld bead; a flux baking is performed at 350°C×1h; an interpass temperature is controlled to be ≤ 80°C.

2. The submerged arc welding method of 5Ni steel for shipbuilding according to claim 1, wherein the to-be-spliced material has a thickness of 40 mm to 50 mm.

3. The submerged arc welding method of 5Ni steel for shipbuilding according to claim 1, wherein the groove has an angle of 45° and a blunt edge of 5 mm.

4. The submerged arc welding method of 5Ni steel for shipbuilding according to claim 1, wherein, under ultrasonic flaw detection, the welded joint of two spliced base materials has a result which meets the I-level requirements stipulated in the GB/T 11345-1989 standard.

5. The submerged arc welding method of 5Ni steel for shipbuilding according to claim 1, wherein, for the welded joint of two spliced base materials, the microstructure in the weld seam zone is austenite, and the microstructure in the Heat Affected Zone is lower bainite, wherien the lower bainite structure has fine lamellar layers, and thus has good toughness at an ultra-low temperature.

## Patentansprüche

1. Unterpulverschweißverfahren von 5Ni-Stahl für den Schiffsbau, umfassend
(1) Verwenden von 5Ni-Stahl mit einer Zugfestigkeit von 630-670 MPa als Ausgangsmaterial für das Spleißen, wobei das zu spleißende Ausgangsmaterial einen Querschlagzähigkeitswert von ≥ 180 J bei -130 °C aufweist; ein passendes Schweißmaterial ein Schweißmaterial mit einer Zugfestigkeit von 630-710 MPa ist, wobei ein Schweißdraht einen Durchmesser von Φ2,4 mm oder mehr aufweist und zu einem Produktmodell von INCO-WELD Filler Metal C-276 gehört und ein Flussmittel INCOFLUX 9 ist; wobei der Schweißdraht die folgende chemische Zusammensetzung in Massenprozent aufweist, C: ≤0,03%, Si: 0,10-0,40%, Mn: 0,2-1,0%, P: ≤0,020%, S: ≤0,030%, Cr: 14-18%, Ni: 53-60%, W: 3,0-4,5%, Fe: 4,0-7,0%, Mo: 15,0-17,0%, und es sich bei dem Rest um unvermeidbare Verunreinigungselemente handelt;
(2) das zu spleißende Material verwendet eine K-förmige Fuge als Fuge für das Unterpulverschweißen;
(3) Schweißparameter: Schweißstrom beträgt 410±10 A, Schweißspannung beträgt 32±1 V, Schweißgeschwindigkeit beträgt 27±2 cm/min, Schweißenergie beträgt 30±3 KJ/cm; kontinuierliches Schweißen aneinandergrenzender Verbindungen von zu spleißenden Ausgangsmaterialien, wobei die Ausgangsmaterialien die gleiche Plattendicke aufweisen, bis die Schweißnaht gefüllt ist; nach jedem Schweißdurchgang Verwenden einer Drahtbürste zum Reinigen der Schweißraupe; ein Flußmittelbrennen wird bei 350°C x 1h durchgeführt; eine Zwischenlagentemperatur wird auf ≤ 80°C gesteuert.

2. Unterpulverschweißverfahren von 5Ni-Stahl für den Schiffsbau nach Anspruch 1, wobei das zu spleißende Material eine Dicke von 40 mm bis 50 mm aufweist.

3. Unterpulverschweißverfahren von 5Ni-Stahl für den Schiffsbau nach Anspruch 1, wobei die Fuge einen Winkel von 45° und eine stumpfe Kante von 5 mm aufweist.

4. Unterpulverschweißverfahren von 5Ni-Stahl für den Schiffsbau nach Anspruch 1, wobei unter Ultraschallfehlernachweis die Schweißverbindung von zwei gespleißten Ausgangsmaterialien ein Ergebnis aufweist, das die I-Level-Anforderungen erfüllt, die in der Norm GB/T 11345-1989 festgelegt sind.

5. Unterpulverschweißverfahren von 5Ni-Stahl für den Schiffsbau nach Anspruch 1, wobei bei der Schweißverbindung von zwei gespleißten Ausgangsmaterialien die Mikrostruktur in der Schweißnahtzone Austenit ist und die Mikrostruktur in der Wärmeeinflusszone unterer Bainit ist, wobei die Struktur aus unterem Bainit feine lamellare Schichten aufweist und somit eine gute Zähigkeit bei einer ultraniedrigen Temperatur aufweist.

## Revendications

1. Procédé de soudage à l'arc sous flux en poudre d'acier 5Ni pour la construction navale, comprenant
(1) l'utilisation d'acier 5Ni possédant une résistance à la traction de 630-670 MPa en tant que matériau de base pour l'épissure, ledit matériau de base à épisser possédant une valeur de résistance aux chocs transversaux ≥ 180 J à -130°C ; un matériau de soudage correspondant est un matériau de soudage possédant une résistance à la traction de 630-710 MPa, un fil de soudage possédant un diamètre supérieur ou égal à Φ2,4 mm et appartenant à un modèle de produit de métal d'apport INCO-WELD C-276, et un flux étant INCOFLUX 9 ; ledit fil de soudage possédant la composition chimique suivante en pourcentage massique, C : ≤ 0,03 %, Si : 0,10-0,40 %, Mn : 0,2-1,0 %, P : ≤ 0,020 %, S : ≤ 0,030 %, Cr : 14-18 %, Ni : 53-60 %, W : 3,0-4,5 %, Fe : 4,0-7,0 %, Mo : 15,0-17,0 %, et le reste est constitué d'éléments d'impureté inévitables ;
(2) le matériau à épisser utilise une rainure en forme de K en tant que rainure pour le soudage à l'arc sous flux en poudre ;
(3) des paramètres de soudage : le courant de soudage est de 410 ± 10 A, la tension de soudage est de 32 ± 1 V, la vitesse de soudage est de 27 ± 2 cm/min, l'énergie de soudage est de 30 ± 3 KJ/cm ; le soudage en continu des joints aboutés de matériaux de base à épisser, lesdits matériaux de base possédant la même épaisseur de plaque, jusqu'à ce que le cordon de soudure soit rempli ; après chaque passe de soudage, l'utilisation d'une brosse métallique pour nettoyer le cordon de soudure ; une cuisson au flux est effectuée à 350°C x 1 h ; une température de la passe intermédiaire est régulée pour être ≤ 80°C.

2. Procédé de soudage à l'arc sous flux d'acier 5Ni pour la construction navale selon la revendication 1, ledit matériau à épisser possédant une épaisseur de 40 mm à 50 mm.

3. Procédé de soudage à l'arc sous flux d'acier 5Ni pour la construction navale selon la revendication 1, ladite rainure possédant un angle de 45° et un bord émoussé de 5 mm.

4. Procédé de soudage à l'arc sous flux d'acier 5Ni pour la construction navale selon la revendication 1, sous détection de défauts par ultrasons, le joint soudé de deux matériaux de base épissés possédant un résultat qui répond aux exigences de niveau I stipulées dans la norme GB/T 11345-1989.

5. Procédé de soudage à l'arc sous flux d'acier 5Ni pour la construction navale selon la revendication 1, pour le joint soudé de deux matériaux de base épissés, ladite microstructure dans la zone de joint de soudure étant de l'austénite, et ladite microstructure dans la zone affectée par la chaleur étant de la bainite inférieure, ladite structure de bainite inférieure possédant de fines couches lamellaires, et possédant ainsi une bonne ténacité à une température ultra-basse.
